# EUROPÄISCHE PATENTSCHRIFT

(11) **EP 1 330 480 B1**
(45) Veröffentlichungstag und Bekanntmachung des Hinweises auf die Patenterteilung: **23.08.2006**
(21) Anmeldenummer: 01992730.0
(22) Anmeldetag: 30.10.2001
(51) Int. Cl.: C08G 18/08, C08G 18/12, C08G 18/66, C08G 18/76, C09D 175/04, C08F 283/00

(54) **POLYMERGEMISCHE AUF BASIS SULFIDGRUPPEN ENTHALTENDER POLYURETHANE UND IHRE VERWENDUNG**
POLYMERIC MIXTURES BASED ON POLYURETHANES CONTAINING SULPHIDE GROUPS AND USE THEREOF
MELANGES POLYMERES A BASE DE POLYURETHANNES CONTENANT DES GROUPES SULFURE ET LEUR UTILISATION

(30) Priorität: 31.10.2000 DE 10053890
(43) Veröffentlichungstag der Anmeldung: 30.07.2003
(73) Patentinhaber: BASF Coatings Aktiengesellschaft, 48165 Münster (DE)
(72) Erfinder: LÖCKEN, Wilma, 45721 Haltern (DE); RINK, Heinz-Peter, 48153 Münster (DE); KRÜGER, Thomas, 97249 Eisingen (DE); SCHWARTE, Stefan, 48282 Emsdetten (DE); MORITZ, Hans-Ulrich, 21227 Bendesdorf (DE); KAGERER, Hartmut, 44534 Lünen (DE)
(74) Vertreter: Fitzner, Uwe
(86) Internationale Anmeldenummer: PCT/EP2001/012508
(87) Internationale Veröffentlichungsnummer: WO 2002/036655

(56) Entgegenhaltungen:
- EP-A2- 0 465 070
- DE-A1- 3 508 428
- FR-A- 894 134
- US-A- 4 301 270
- US-A- 4 349 656
- US-A- 6 001 424

## Beschreibung

Die vorliegende Erfindung betrifft neue Polymergemische auf Basis Sulfidgruppen enthaltender Polyurethane. Außerdem betrifft die vorliegende Erfindung die Herstellung der neuen Polymergemische auf Basis Sulfidgruppen enthaltender Polyurethane. Des weiteren betrifft die vorliegende Erfindung neue Dispersionen, die die neuen Polymergemische enthalten. Darüber hinaus betrifft die vorliegende Erfindung die Verwendung der neuen Polymergemische und ihrer Dispersionen zur Herstellung neuer Beschichtungsstoffe, Klebstoffe und Dichtungsmassen. Ferner betrifft die vorliegende Erfindung die Herstellung von neuen Beschichtungen, Klebstoffen und Dichtungen auf und in grundierten und ungrundierten Substraten. Nicht zuletzt betrifft die vorliegende Erfindung die grundierten und ungrundierten Substrate, die mit einer neuen Beschichtung beschichtet, einer neuen Klebschicht verklebt und/oder mit einer neuen Dichtung abgedichtet sind.

Im Rahmen der vorliegenden Erfindung werden unter Polymergemischen die polymeren Materialien verstanden, die bei der Polymerisation von olefinisch ungesättigten Monomeren in der Gegenwart von Polyurethanen resultieren. Dabei kann es sich um Pfropfmischpolymerisate handeln, die keine oder nur sehr geringe Mengen an Polyurethanen und (Co)Polymerisaten der olefinisch ungesättigten Monomeren enthalten. Die Polymergemische können indes auch aus den Polyurethanen und den (Co)Polymerisaten bestehen. Des weiteren kann es sich um Gemische aus Pfropfmischpolymerisaten, Polyurethanen und (Co)Polymerisaten der olefinisch ungesättigten Monomeren handeln.

Beispiele geeigneter Polymerisationsinitiatoren sind freie Radikale bildende Initiatoren wie Dialkylperoxide, wie Di-tert.-Butylperoxid oder Dicumyl-peroxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethylhexanoat oder tert.-Butylper-2-ethylhexanoat; Kalium-, Natrium- oder Ammoniumsperoxodisulfat; Azodinitrile wie Azobisisobutyronitril; C-C-spaltende Initiatoren wie Benzpinakolsilylether; oder eine Kombination eines nicht oxidierenden Initiators mit Wasserstoffperoxid. Bevorzugt werden wasserunlösliche Initiatoren verwendet. Die Initiatoren werden bevorzugt in einer Menge von 0,1 bis 25 Gew.-%, besonders bevorzugt von 0,75 bis 10 Gew.-%, bezogen auf das Gesamtgewicht der Monomeren (a), eingesetzt.

In den Lösungen oder den wäßrigen Emulsionen werden dann die Monomeren (a) mit Hilfe der vorstehend genannten radikalbildenden Initiatoren bei Temperaturen von 0 bis 95°C, vorzugsweise 40 bis 95 °C, und bei Verwendung von Redoxsystemen bei Temperaturen von 30 bis 70 °C polymerisiert. Bei Arbeiten unter Überdruck kann die Emulsionspolymerisation auch bei Temperaturen oberhalb 100 °C durchgeführt werden. Gleiches gilt für die Lösungspolymerisation, wenn höhersiedende organische Lösemittel und/oder Überdruck angewandt wird.

Es ist bevorzugt, daß mit dem Initiatorzulauf einige Zeit, im allgemeinen ca. 1 bis 15 Minuten, vor dem Zulauf der Monomeren begonnen wird. Ferner ist ein Verfahren bevorzugt, bei dem die Initiatorzugabe zum gleichen Zeitpunkt wie die Zugabe der Monomeren begonnen und etwa eine halbe Stunde, nachdem die Zugabe der Monomeren beendet worden ist, beendet wird. Der Initiator wird vorzugsweise in konstanter Menge pro Zeiteinheit zugegeben. Nach Beendigung der Initiatorzugabe wird das Reaktionsgemisch noch so lange (in der Regel 1 bis 1,5 Stunden) auf Polymerisationstemperatur gehalten, bis alle eingesetzten Monomere im wesentlichen vollständig umgesetzt worden sind. "Im wesentlichen verstehen, in die wäßrige Phase einzudringen oder darin zu verbleiben. Demgemäß ist im Rahmen der vorliegenden Erfindung unter der Eigenschaft hydrophob die konstitutionelle Eigenschaft eines Moleküls oder einer funktionellen Gruppe zu verstehen, sich gegenüber Wasser exophil zu verhalten, d. h., sie zeigen die Tendenz, in Wasser nicht einzudringen oder die wäßrige Phase zu verlassen. Ergänzend wird auf Römpp Lexikon Lacke und Druckfarben, Georg Thieme Verlag, Stuttgart, New York, 1998, »Hydrophilie«, »Hydrophobie«, Seiten 294 und 295, verwiesen.

Die bekannten Polymergemische auf Polyurethanbasis werden vor allem für die Herstellung von Wasserbasislacken verwendet. Die bekannten Wasserbasislacke dienen in erster Linie der Herstellung farb- und/oder effektgebender Basislackierungen in Mehrschichtlackierungen nach dem Naß-in-naß-Verfahren, wie sie beispielsweise in den vorstehend aufgeführten Patentschriften und Patentanmeldungen beschrieben werden.

Die Herstellung der bekannten Polymergemische auf Polyurethanbasis kann indes Probleme bereiten.

So werden häufig laterale und/oder terminale Allylgruppen als Pfropfzentren eingebaut. Indes ist die Reaktivität der Allylgruppen vergleichsweise gering. Verwendet man statt dessen die reaktiveren Acrylat- oder Methacrylatgruppen, kann es zum Gelieren der Polyurethane noch vor oder während der Pfropfmischpolymerisation kommen.

Nicht zuletzt kann sich in manchen Fällen der Gehalt der Polyurethane an olefinisch ungesättigten Gruppen als zu niedrig für eine vollständige Pfropfung erweisen, so daß ein großer Teil der aufzupfropfenden Monomere separate Homo- und/oder Copolymerisate neben dem Poylurethan bildet, die die anwendungstechnischen Eigenschaften der Polymergemische und der hiermit hergestellten Beschichtungsstoffe, Klebstoffe und Dichtungsmassen beeinträchtigen können. Dieser Nachteil ist nicht ohne weiteres durch eine Erhöhung des Doppelbindungsanteils in den zu pfropfenden Polyurethanen zu beheben, weil hierdurch andere wichtige anwendungstechnische Eigenschaften der Polyurethane in Mitleidenschaft gezogen werden.

Polyurethane, die Thiolgruppen, insbesondere terminale Thiolgruppen, enthalten, sind bekannt.

Aus der deutschen Patentanmeldung DE 40 17 940 A 1 sind alpha, omegadifunktionelle Präpolymere bekannt, die endständige Thiolgruppen und in der Kette Thiocarbamatgruppen enthalten. Sie werden durch die Umsetzung von Dithiolen mit Diisocyanaten hergestellt. Sie können der Herstellung von Linearpolymeren, Netzwerken, Gießharzen, Kompositen, Laminaten, Klebstoffen, Beschichtungen, Lacken sowie als Ausgangsprodukte zur Herstellung thermoplastischer hochmolekularer Materialien dienen. Einzelheiten betreffend diese Verwendungszwecke werden indes nicht angegeben.

Aus der deutschen Patentanmeldung DE 35 08 428 A 1 sind Oligourethane mit terminalen Thiolgruppen bekannt. Sie werden hergestellt durch die Umsetzung von Polyisocyanaten mit einem Unterschuß an Polyolen und Mercaptoalkanolen. Sie werden als Bindemittel für oxidativ härtbare Beschichtungsstoffe und Dichtungsmassen, als Zusatzstoffe für Epoxidharze oder als Vernetzungsmittel für olefinisch ungesättigte Verbindungen enthaltende Kunststoffe oder Kunststoffvorprodukte verwendet.

Aus der deutschen Patentanmeldung DE 21 21 478 A 1 ist ein Verfahren zum Vernetzen von Polymerisaten, die Thiolgruppen enthalten, bekannt. Als Vernetzungsmittel werden Nitril-N-oxide oder deren Vorstufen wie Poly(hydroxamoylhalogenide) verwendet.

Aus der deutschen Patentanmeldung DE 34 07 031 A 1 ist ein Verfahren zur Herstellung von chemisch härtbaren oder mit Wasser vulkanisierbaren Klebstoffen, Beschichtungsstoffen, Dichtungsmassen und Gießmassen auf der Basis von Polyurethanen bekannt. Bei diesem Verfahren werden freie Isocyanatgruppen enthaltende Präpolymere mit Thiolgruppen enthaltenden Präpolymeren umgesetzt, die durch die Umsetzung der freie Isocyanatgruppen enthaltenden Präpolymeren mit Mercaptoalkanolen erhältlich sind.

Aus der deutschen Patentanmeldung DE 20 28 892 A 1 ist eine härtbare Zusammensetzung bekannt, die einen Bestandteil mit mehreren olefinisch oder acetylenisch ungesättigten Bindungen- und ein Polythiol als Vernetzungsmittel enthält. Die Reaktion zwischen diesen Bestandteilen kann durch alpha-Hydroxycarbonsäuren beschleunigt werden.

Aus der EP 0 465 070 A2 sind Polyurethane enthaltend Thiolgruppen zur Anwendung für magnetische Aufzeichnungsmedien bekannt.

Aufgabe der vorliegenden Erfindung ist es, neue Polymergemische auf Polyurethanbasis bereitzustellen, die die Nachteile des Standes der Technik nicht mehr aufweisen, sondern die sich in einfacher Weise gezielt in der Gegenwart von leicht zugänglichen hydrophilen und hydrophoben Polyurethanen in hohen Ausbeuten herstellen lassen und unabhängig davon, ob sie geringe oder große Mengen an Homo- und/oder Copolymerisaten enthalten, sehr gute anwendungstechnische Eigenschaften aufweisen. Die neuen Polymergemische auf Polyurethanbasis sollen sich für die Herstellung von wäßrigen Beschichtungsstoffen, Klebstoffen und Dichtungsmassen eignen, welche auf und/oder in grundierten und ungrundierten Substraten Beschichtungen, Klebschichten und Dichtungen liefern, die zumindest das Eigenschaftsprofil der bisher bekannten Beschichtungen, Klebschichten und Dichtungen aufweisen, wenn nicht gar übertreffen.

Demgemäß wurde das neue Polymergemisch gefunden, das herstellbar ist, indem man mindestens ein olefinisch ungesättigtes Monomer in einer Lösung oder in einer wäßrigen Dispersion mindestens eines hydrophoben oder hydrophilen Polyurethans polymerisiert, wobei das Sulfidgruppen enthaltende Polyurethan, mindestens eine Gruppe der allgemeinen Formel I in der Polymerhauptkette und/oder mindestens eine Gruppe der allgemeinen Formel II am Kettenende eingebaut enthält:

-X-A-S-B-Y- (I)

-X-A-S-B-YH (II),

worin die Variablen die folgende Bedeutung haben:
- S: Schwefelatom;
- X und Y: unabhängig voneinander Sauerstoffatome, Schwefelatome oder Gruppen -NZ mit Z = Wasserstoffatom oder Alkylrest mit 1 bis 10 Kohlenstoffatomen; und
- A und B: unabhängig voneinander zweiwertige organische Reste.

Im folgenden wird das Sulfidgruppen enthaltende Polyurethan als "erfindungsgemäßes Polyurethan" bezeichnet.

Im folgenden wird das neue Polymergemisch als "erfindungsgemäßes Polymergemisch " bezeichnet.

Außerdem wurden die neuen wäßrigen Dispersionen des erfindungsgemäßen Polyurethans und des erfindungsgemäßen Polymergemischs gefunden.

Desweiteren wurden die neuen Beschichtungsstoffe, Klebstoffe und Dichtungsmassen auf Basis des erfindungsgemäßen Polyurethans, des erfindungsgemäßen Polymergemischs und/oder ihrer Dispersionen gefunden.

Ferner wurden die neuen Beschichtungen, Klebschichten und Dichtungen auf und/oder in grundierten und ungrundierten Substraten gefunden, die im folgenden als "erfindungsgemäße Beschichtungen, Klebschichten und Dichtungen" bezeichnet werden.

Weitere erfindungsgemäße Gegenstände ergeben sich aus der Beschreibung.

Im Hinblick auf den Stand der Technik war es überraschend, daß die komplexe Aufgabe, die der vorliegenden Erfindung zugrunde liegt mit Hilfe der erfindungsgemäßen Polyurethane und der erfindungsgemäßen Polymergemische in eleganter Weise gelöst werden konnte. Noch mehr überraschte, daß weder für das Verfahren zur Herstellung der erfindungsgemäßen Polyurethane noch für das Verfahren zur Herstellung der erfindungsgemäßen Polymergemische besondere neue apparative oder verfahrenstechnische Maßnahmen notwendig werden, sondern daß die vom Stand der Technik her bekannten Verfahrensmaßnahmen und Vorrichtungen angewandt werden können. Hierbei ist hervorzuheben, daß bei den besagten erfindungsgemäßen Verfahren nicht die verfahrenstechnischen und sicherheitstechnischen Probleme aufreten, die mit der Verwendung olefinisch ungesättigter Polyurethane verbunden sind, wie etwa das Gelieren des Ansatzes. Noch mehr überraschte die außerordentlich breite Anwendbarkeit der erfindungsgemäßen Polyurethane und Polymergemische und der erfindungsgemäßen Dispersionen.

Die Herstellung des erfindungsgemäßen Polymergemischs geht aus von mindestens einem, vorzugsweise einem, hydrophilen oder hydrophoben erfindungsgemäßen Polyurethan.

Das erfindungsgemäße Polyurethan enthält mindestens eine Gruppe der allgemeinen Formel I in der Polymerhauptkette und/oder mindestens eine Gruppe der allgemeinen Formel II am Kettenende eingebaut:

-X-A-S-B-Y- (I)

-X-A-S-B-YH (II),

worin die Variablen die folgende Bedeutung haben:
- S: Schwefelatom;
- X und Y: unabhängig voneinander Sauerstoffatome, Schwefelatome oder Gruppen -NZ mit Z = Wasserstoffatom oder Alkylrest mit 1 bis 10 Kohlenstoffatomen; und
- A und B: unabhängig voneinander zweiwertige organische Reste.

Beispiele geeigneter Alkylreste Z sind Methyl, Ethyl, Propyl, Butyl, Pentyl, Hexyl, Heptyl, Octyl, Nonyl oder Decyl.

Die zweiwertigen organischen Reste A und B können gleich oder verschieden voneinander sein. Geeignet sind alle zweiwertigen organischen Resten A und B, die nicht isocyanatreaktiv sind.

Beispiele geeigneter zweiwertiger organischer Reste sind substituierte oder unsubstituierte aliphatische, cycloaliphatische, aromatische, aliphatisch-cycloaliphatische, aliphatisch-aroamtische und/oder cycloaliphatisch-aromatische zweiwertige Reste, die Heteroatome enthalten können, die allerdings nicht isocyanatreaktiv an sein dürfen.

Geeignete Substituenten sind elektronenziehende oder elektronenschiebende Atome oder organische Reste, die nicht isocyanatreaktiv sind.

Beispiele geeigneter Substitutienten sind Halogenatome, insbesondere Chlor und Fluor, Nitrilgruppen, Nitrogruppon, partiell oder vollständig halogenierte, insbesondere chlorierte und/oder fluorierte, Alkyl-, Cycloalkyl-, Alkylcycloalkyl-, Cycloalkylalkyl-, Aryl-, Alkylaryl-, Cycloalkylaryl- Arylalkyl- und Arylcycloalkylreste; Aryloxy-, Alkyloxy- und Cycloalkyloxyreste, insbesondere Phenoxy, Naphthoxy, Methoxy, Ethoxy, Propxy, Butyloxy oder Cyclohexyloxy.

Erfindungsgemäß sind die unsubstituierten zweiwertigen organischen Reste A und B, die keine Heteroatome enthalten, von Vorteil und werden deshalb indungsgemäß bevorzugt verwendet.

Besonders gut geeignete zweiwertige aliphatische Reste A und B leiten sich ab von aliphatischen Kohlenwasserstoffen wie Methan, Ethan, Propan, Butan, Pentan, Hexan, Heptan, Octan, Nonan oder Decan.

Besonders gut geeignete zweiwertige cycloaliphatische Reste A und B leiten sich ab von cycloaliphatischen Kohlenwasserstoffen wie Cyclobutan, Cyclopentan, Cyclohexan, Norbornen oder Decalin.

Besonders gut geeignete zweiwertige aromatische Reste A und B leiten sich ab von aromatischen Kohlenwasserstoffen wie Benzol, Naphthalin oder Biphenyl.

Besonders gut geeignete aliphatisch-cycloaliphatische zweiwertige Reste A und B leiten sich ab von aliphatisch-cycloaliphatischen Kohlenwasserstoffen wie Ethylcyclopentan oder Methylcyclohexan.

Besonders gut geeignete aliphatisch-aromatische zweiwertige Reste A und B leiten sich ab von aliphatisch-aromatischen Kohlenwasserstoffen wie Toluol oder Xylol.

Besonders gut geeignete cycloaliphatisch-aromatische zweiwertige Reste A und B leiten sich ab von cycloaliphatisch-aromatischen Kohlenwasserstoffen wie Cyclohexylbenzol oder Cyclohexylbiphenyl.

Ganz besonders gut geeignet sind die zweiwertigen aliphatischen Reste A und B, insbesondere der Ethan-1,2-diyl-Rest (Dimethylen-Rest).

Demnach handelt es sich bei der ganz besonders bevorzugt eingesetzten Gruppe der allgemeinen Formel I um die 1,7-Dioxa-4-thia-heptan-1,7-diyl-Gruppe und bei der ganz besonders bevorzugt eingesetzten Gruppe der allgemeinen Formel II um den 1,7-Dioxa-4-thia-heptan-1-yl-Gruppe.

Vorzugsweise enthalten die erfindungsgemäßen Polyurethane mindestens eine, insbesondere mindestens zwei, kettenständige Gruppen der allgemeinen Formel I. Darüber hinaus können sie noch mindestens eine, insbesondere mindestens zwei, endständige Gruppen der allgemeinen Formel II enthalten. Der Gehalt an Gruppen der allgemeinen Formel I oder an Gruppen der allgemeinen Formel I und II kann über die stöchiometrischen Verhältnisse der nachstehend beschriebenen Ausgangsverbindungen für die erfindungsgemäßen Polyurethane eingestellt werden.

Die erfindungsgemäßen Polyurethane sind linear, sternförmig verzweigt oder kammförmig, insbesondere aber linear, aufgebaut. Außer den erfindungswesentlichen Gruppen der allgemeinen Formel I und/oder der allgemeinen Formel II können sie weitere funktionelle Gruppen enthalten.

So können sowohl die hydrophilen als auch die hydrophoben erfindungsgemäßen Polyurethane reaktive funktionelle Gruppen enthalten, durch die die resultierenden erfindungsgemäßen Polymergemische thermisch selbstvernetzend oder fremdvernetzend werden. Voraussetzung ist indes, daß diese reaktiven funktionellen Gruppen nicht die Pfropfmischpolymerisation stören bzw. inhibieren.

Die hydrophilen Polyurethane enthalten im allgemeinen entweder
(f1) funktionelle Gruppen, die durch Neutralisationsmittel und/oder Quaternisierungsmittel in Kationen überführt werden können, oder
(f2) funktionelle Gruppen, die durch Neutralisationsmittel in Anionen überführt werden können, und/oder anionische Gruppen und/oder
(f3) nichtionische hydrophile Gruppen, insbesondere Poly(alkylenether)-Gruppen,
die die Dispergierbarkeit der Polyurethane und der erfindungsgemäßen Polymergemische in Wasser fördern.

Beispiele geeigneter erfindungsgemäß zu verwendender funktioneller Gruppen (f1), die durch Neutralisationsmittel und/oder Quaternisierungsmittel in Kationen überführt werden können, sind primäre, sekundäre oder tertiäre Aminogruppen, sekundäre Sulfidgruppen oder tertiäre Phoshingruppen, insbesondere tertiäre Aminogruppen oder sekundäre Sulfidgruppen.

Beispiele geeigneter erfindungsgemäß zu verwendender kationischer Gruppen (f1) sind primäre, sekundäre, tertiäre oder quaternäre Ammoniumgruppen, tertiäre Sulfoniumgruppen oder quaternäre Phosphoniumgruppen, vorzugsweise quaternäre Ammoniumgruppen oder tertiäre Sulfoniumgruppen, insbesondere aber tertiäre Sulfoniumgruppen.

Beispiele geeigneter erfindungsgemäß zu verwendender funktioneller Gruppen (f2), die durch Neutralisationsmittel in Anionen überführt werden können, sind Carbonsäure-, Sulfonsäure- oder Phosphonsäuregruppen, insbesondere Carbonsäuregruppen.

Beispiele geeigneter erfindungsgemäß zu verwendender anionischer Gruppen (f2) sind Carboxylat-, Sulfonat- oder Phosphonatgruppen, insbesondere Carboxylatgruppen.

Beispiele geeigneter Neutralisationsmittel für in Kationen umwandelbare funktionelle Gruppen (f1) sind anorganische und organische Säuren wie Schwefelsäure, Salzsäure, Phosphorsäure, Ameisensäure, Essigsäure, Milchsäure, Dimethylolpropionsäure oder Zitronensäure.

Beispiele für geeignete Neutralisationsmittel für in Anionen umwandelbare funktionelle Gruppen (f2) sind Ammoniak oder Amine, wie z.B. Trimethylamin, Triethylamin, Tributylamin, Dimethylanilin, Diethylanilin, Triphenylamin, Dimethylethanolamin, Diethylethanolamin, Methyldiethanolamin, 2-Aminomethylpropanol, Dimethylisopropylamin, Dimethylisopropanolamin oder Triethanolamin. Bevorzugt wird als Neutralisationsmittel Dimethylethanolamin und/oder Triethylamin eingesetzt.

Vorteilhafterweise weist das erfindungsgemäße Polyurethan je nach Art der Stabilisierung eine Säurezahl oder Aminzahl von 10 bis 250 mg KOH/g (ionische Stabilisierung oder nichtionische plus ionische Stabilisierung) oder von 0 bis 10 mg KOH/g (nichtionische Stabilisierung), eine OH-Zahl von 30 bis 350 mg KOH/g und ein zahlenmittleres Molekulargewicht von 1.500 bis 55.000 Dalton auf.

Die erfindungsgemäßen Polyurethane können nach beliebigen üblichen und bekannten Methoden der Polyurethanchemie hergestellt werden. Erfindungsgemäß ist es indes von Vorteil, sie durch die Umsetzung eines isocyanatgruppenhaltigen Polyurethanpräpolymeren mit mindestens einer Verbindung der allgemeinen Formel III

HX-A-S-B-YH (III)

herzustellen. In der allgemeinen Formel III haben die Variablen die vorstehend bei den allgemeinen Formeln I und II angegebene Bedeutung. Beispiele gut geeigneter Verbindungen der allgemeinen Formel III sind demnach Thiodiethanol, Thiodicyclohexan-4-ol oder Thiodiphenol, insbesondere aber Thiodiethanol.

Bei den isocyanatgruppenhaltigen Polyurethanpräpolymeren handelt es sich um lineare, sternförmig verzweigte oder kammförmige Polymere oder Oligomere. Vorzugsweise werden lineare Polyurethanpräpolymere eingesetzt.

Im Rahmen der vorliegenden Erfindung werden hier und im folgenden unter Oligomeren Harze verstanden, die mindestens 2 bis 15 Monomereinheiten in ihrem Molekül enthalten. Im Rahmen der vorliegenden Erfindung werden unter Polymeren Harze verstanden, die mindestens 10 Monomereinheiten in ihrem Molekül enthalten. Ergänzend wird zu diesen Begriffen auf Römpp Lexikon Lacke und Druckfarben, Georg Thieme Verlag, Stuttgart, New York, 1998, »Oligomere«, Seite 425, verwiesen.

Die Umsetzung der isocyanatgruppenhaltigen Polyuremanpräpolymeren mit den Verbindungen der allgemeinen Formel III weist keine methodischen Besonderheiten auf, sondern erfolgt nach den üblichen und bekannten Methoden der Chemie organischer Polysiocyanate, wie sie beispielsweise in den deutschen Patentanmeldungen DE 34 07 031 A 1 oder DE 40 17 940 A 1 beschrieben werden. Üblicherweise wird die Umsetzung so lange geführt, bis keine freien Isocyanatgruppen mehr nachweisbar sind.

Methodisch gesehen weist die Herstellung der isocyanatgruppenhaltigen Polyurethanpräpolymere keine Besonderheiten auf, sondern erfolgt beispielsweise wie in den Patentschriften EP 0 089 497 B 1 oder EP 0 228 003 B 1 beschrieben, durch Umsetzung mindestens eines Polyisocyanats, insbesondere eines Diisocyanats, mit mindestens einem Polyol, insbesondere einem Diol, wobei die Isocyanatkomponente im molaren Überschuß angewandt wird, so daß endständige freie Isocyanatgruppen resultieren.

Vorzugsweise werden für die Herstellung der isocyanatgruppenhaltigen Polyurethanpräpolymere Diisocyanate sowie gegebenenfalls in untergeordneten Mengen Polyisocyanate zur Einführung von Verzweigungen verwendet. Im Rahmen der vorliegenden Erfindung sind unter untergeordneten Mengen Mengen zu verstehen, die kein Gelieren der Polyurethanpräpolymere bei ihrer Herstellung bewirken. Letzteres kann auch noch durch die Mitverwendung geringer Mengen an Monoisocyanaten verhindert werden.

Beispiele für geeignete Diisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isoeyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4- Diisocyanatocyclohexan, Dicyclohexylmethan-2,4'-diisocyanat, Trimethylendiisocyanat, Tetramethylendiisocyanat, Pentamethylendiisocyanat, Hexamethylendiisocyanat, Ethylethylendüsocyanat, Trimethylhexandiisocyanat, Heptanmethylendiisocyanat oder Diisocyanate, abgeleitet von Dimerfettsäuren, wie sie unter der Handelsbezeichnung DDI 1410 von der Firma Henkel vertrieben und in den Patentschriften DO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan, flüssiges Bis(4-isocyanatocyclohexyl)methan eines trans/trans-Gehalts von bis zu 30 Gew.-%, vorzugsweise 25 Gew.-% und insbesondere 20 Gew.-%, wie es den Patentschriften DE 44 14 032 A 1, GB 1 220 717 A 1, DE-A-16 18 795 oder DE 17 93 785 A 1 beschrieben wird; Toluylendiisocyanat, Xylylendiisocyanat, Bisphenylendiisocyanat, Naphthylendiisocyanat oder Diphenylmethandiisocyanat.

Beispiele geeigneter Polyisocyanate sind die Isocyanurate der vorstehend beschriebenen Diisocyanate.

Beispiele gut geeigneter. Monoisocyanate sind Phenylisocyanat, Cyclohexylisocyanat, Stearylisocyanat, Vinylisocyanat, Methacryloylisocyanat und/oder 1-(1-Isoeyanato-1-methylethyl)-3-(1-methylethenyl)-benzol (TMI® der Firma CYTEC).

Beispiele geeigneter Polyole sind gesättigte oder olefinisch ungesättigte Polyesterpolyole, welche durch Umsetzung von
- gegebenenfalls sulfonierten gesättigen und/oder ungesättigten Polycarbonsäuren oder deren veresterungsfähigen Derivaten, gegebenenfalls zusammen mit Monocarbonsäuren, sowie
- gesättigten und/oder ungesättigten Polyolen, gegebenenfalls zusammen mit Monoolen,
hergestellt werden.

Beispiele für geeignete Polycarbonsäuren sind aromatische, aliphatische und cycloaliphatische Polycarbonsäuren. Bevorzugt werden aromatische und/oder aliphatische Polycarbonsäuren eingesetzt.

Beispiele für geeignete aromatische Polycarbonsäuren sind Phthalsäure, Isophthalsäure, Terephthalsäure, Phthalsäure-, Isophthalsäure- oder Terephthalsäuremonosulfonat, oder Halogenphthalsäuren, wie Tetrachlor- bzw. Tetrabromphthalsäure, von denen Isophthalsäure vorteilhaft ist und deshalb bevorzugt verwendet wird.

Beispiele für geeignete acyclische aliphatische oder ungesättigte Polycarbonsäuren sind Oxalsäure, Malonsäure, Bernsteinsäure, Glutarsäure, Adipinsäure, Pimelinsäure, Korksäure, Azelainsäure, Sebacinsäure, Undecandicarbonsäure oder Dodecandicarbonsäure oder Maleinsäure, Fumarsäure oder Itaconsäure, von denen Adipinsäure, Glutarsäure, Azelainsäure, Sebacinsäure, Dimerfettsäuren und Maleinsäure vorteilhaft sind und deshalb bevorzugt verwendet werden.

Beispiele für geeignete cycloaliphatische und cyclische ungesättigte Polycarbonsäuren sind 1,2-Cyclobutandicarbonsäure, 1,3-Cyclobutandicarbonsäure, 1,2-Cyclopentandicarbonsäure, 1,3-Cyclopentandicarbonsäure, Hexahydrophthalsäure, 1,3-Cyclohexandicarbonsäure, 1,4-Cyclohexandicarbonsäure, 4-Methylhexahydrophthalsäure, Tricyclodecandicarbonsäure, Tetrahydrophthalsäure oder 4-Methyltetrahydrophthalsäure. Diese Dicarbonsäuren können sowohl in ihrer cis- als auch in ihrer trans-Form sowie als Gemisch beider Formen eingesetzt werden.

Weitere Beispiele für geeignete Polycarbonsäuren sind polymere Fettsäuren, insbesondere solche mit einem Dimerengehalt von mehr als 90 Gew.-%, die auch als Dimerfettsäuren bezeichnet werden.

Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen. Außerdem können auch die Anhydride der obengenannten Polycarbonsäuren eingesetzt werden, sofern sie existieren.

Gegebenenfalls können zusammen mit den Polycarbonsäuren auch Monocarbonsäuren eingesetzt werden, wie beispielsweise Benzoesäure, tert.-Butylbenzoesäure, Laurinsäure, Isononansäure oder Fettsäuren natürlich vorkommender Öle sowie Acrylsäure, Methacrylsäure, Ethacrylsäure oder Crotonsäure. Bevorzugt wird als Monocarbonsäure Isononansäure eingesetzt.

Beispiele geeigneter Polyole sind Diole und Triole, insbesondere Diole. Üblicherweise werden Triole neben den Diolen in untergeordneten Mengen verwendet, um Verzweigungen in die Polyesterpolyole einzuführen. Im Rahmen der vorliegenden Erfindung sind unter untergeordneten Mengen Mengen zu verstehen, die kein Gelieren der Polyesterpolyole bei ihrer Herstellung bewirken.

Beispiele geeigneter Diole sind Ethylenglykol, 1,2- oder 1,3-Propandiol, 1,2-, 1,3-oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol, Trimethylpentandiol, Ethylbutylpropandiol, die stellungsisomeren Diethyloctandiole, 2-Butyl-2-ethylpropandiol-1,3, 2-Butyl-2-methylpropandiol-1,3, 2-Phenyl-2-methylpropan-diol-1,3, 2-Propyl-2-ethylpropandiol-1,3, 2-Di-tert.-butylpropandiol-1,3, 2-Butyl-2-propylpropandiol-1,3, 1-Dihydroxymethyl-bicyclo[2.2.1]heptan, 2,2-Diethylpro-pandiol-1,3, 2,2-Dipropylpropandiol-1,3, 2-Cyclohexyl-2-methylpropandiol-1,3, 2,5-Dimethyl-hexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxypropyl)-benzol oder 1,3-(2'-Hydroxypropyl)-benzol.

Von diesen Diolen sind 1,6-Hexandiol und Neopentylglykol besonders vorteilhaft und werden deshalb besonders bevorzugt verwendet.

Die vorstehend genannten Diole können auch als Diole direkt für die Herstellung der Polyurethanpräpolymere eingesetzt werden.

Beispiele geeigneter Triole sind Trimethylolethan, Trimethylolpropan oder Glycerin, insbesondere Trimethylolpropan.

Die vorstehend genannten Triole können auch als Triole direkt für die Herstellung der Polyurethanpräpolymere eingesetzt werden (vgl. die Patentschrift EP 0 339 433 A1).

Gegebenenfalls können untergeordnete Mengen von Monoolen mit verwendet werden. Beispiele geeigneter Monoole sind Alkohole oder Phenole wie Ethanol, Propanol, n-Butanol, sec.-Butanol, tert.-Butanol, Amylalkohole, Hexanole, Fettalkohole, Phenol oder Allylalkohol.

Die Herstellung der Polyesterpolyole kann in Gegenwart geringer Mengen eines geeigneten Lösemittels als Schleppmittel durchgeführt werden. Als Schleppmittel werden z. B. aromatische Kohlenwasserstoffe, wie insbesondere Xylol und (cyclo)aliphatische Kohlenwasserstoffe, z. B. Cyclohexan oder Methylcyclohexan, eingesetzt.

Weitere Beispiele geeigneter Polyole sind Polyesterdiole, die durch Umsetzung eines Lactons mit einem Diol erhalten werden. Sie zeichnen sich durch die Gegenwart von entständigen Hydroxylgruppen und wiederkehrenden Polyesteranteilen der Formel -(-CO-(CHR)ₘ- CH₂-O-)- aus. Hierbei ist der Index m bevorzugt 4 bis 6 und der Substitutent R = Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole wird das unsubstituierte epsilon-Caprolacton, bei dem m den Wert 4 hat und alle R-Substituenten Wasserstoff sind, bevorzugt. Die Umsetzung mit Lacton wird durch niedermolekulare Polyole wie Ethylenglykol, 1,3-Propandiol, 1,4-Butandiol oder Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole, die durch Reaktion von beispielsweise epsilon-Caprolactam mit niedermolekularen Diolen hergestellt werden.

Weitere Beispiele geeigneter Polyole sind Polyetherpolyole, insbesondere mit einem zahlenmittleren Molekulargewicht von 400 bis 5.000, insbesondere von 400 bis 3.000. Gut geeignete Polyetherdiole sind z.B. Polyetherdiole der allgemeinen Formel H-(-O-(CHR¹)ₒ-)ₚOH, wobei der Substituent R¹ = Wasserstoff oder ein niedriger, gegebenenfalls substituierter Alkylrest ist, der Index o = 2 bis 6, bevorzugt 3 bis 4, und der Index p = 2 bis 100, bevorzugt 5 bis 50, ist. Als besonders gut geeignete Beispiele werden lineare oder verzweigte Polyetherdiole wie Poly(oxyethylen)glykole, Poly(oxypropylen)glykole und Poly(oxybutylen)glykole genannt.

Durch die Polyetherdiole können die nichtionischen hydrophilen funktionellen Gruppen (f3) oder ein Teil hiervon in die Hauptkette(n) der Polyurethanpräpolymeren eingeführt werden.

Für die Herstellung der Polyurethanpräpolymeren können noch weitere Ausgangsverbindungen verwendet werden, um das Eigenschaftsprofil der erfindungs gemäßen Polyurethane und der erfindungsgemäßen Polymergemische in vorteilhafter Weise zu variieren.

Sollen die erfindungsgemäßen Polyurethane und Polymergemische selbstvernetzende Eigenschaften aufweisen, kann mindestens eine Verbindung mit mindestens einer blockierten Isocyanatgruppe und mindestens zwei isocyanatreaktiven funktionellen Gruppen verwendet werden. Beispiele geeigneter isocyanatreaktiver Gruppen sind -SH, -NH₂, >NH, -OH, -O-(CO)-NH-(CO)-NH₂ oder -O-(CO)-NH₂, von denen die primären und sekundären Aminogruppen und die Hydroxylgruppe von Vorteil und die Hydroxylgruppen von besonderem Vorteil sind. Beispiele geeigneter Blockierungsmittel sind die aus der US-Patentschrift US 4,444,954 A 1 bekannten Blockierungsmittel, von denen die Oxime und Ketoxime xiii), insbesondere die Ketoxime xiii), speziell Methylethylketoxim, besondere Vorteile bieten und deshalb besonders bevorzugt verwendet werden. Die blockierten Isocyanatgruppen können aber auch aus der Umsetzung der freien Isocyanatgruppen des Polyurethanpräpolymeren mit den Blockierungsmitteln resultieren.

Zur Einführung olefinisch ungesättigter Gruppen - sofern verwendet - kann mindestens eine Verbindung mit mindestens einer olefinisch ungesättigten Gruppe und mindestens zwei isocyanatreaktiven funktionellen Gruppen verwendet werden. Beispiele geeigneter isocyanatreaktiver funktioneller Gruppen sind die vorstehend beschriebenen. Beispiele geeigneter olefinisch ungesättigter Gruppen und Verbindungen zu ihrer Einführung werden in den Patentanmeldungen und Patentschriften DE 197 22 862 C 2, DE 196 45 761 A 1, EP 0 401 565 A 1, EP 0 522 420 A 1, EP 0 522 419 A 2, EP 0 755 946 A 1, EP 0 608 021 A 1, EP 0 708 788 A 1 oder EP 0 730 613 A 1 sowie in den nicht vorveröffentlichten deutschen Patentanmeldungen DE 199 53 446.2, DE 199 53 445.2 oder DE 199 53 203.6 beschrieben. Alternativ können die olefinisch ungesättigten Gruppen auch über die vorstehend beschriebenen Verbindungen mit mindestens einer olefinisch ungesättigten Gruppe und einer Isocyanatgruppe eingeführt werden.

Für die Herstellung der hydrophilen erfindungsgemäßen Polyurethane werden in die isocyanatgruppenhaltigen Polyurethanpräpolymere des weiteren Verbindungen mit mindestens einer hydrophilen funktionellen Gruppe und mindestens einer isocyanatreaktiven funktionellen Gruppe eingebaut.

Die Einführung von hydrophilen funktionellen (potentiell) kationischen Gruppen (f1) in die Polyurethanpräpolymere erfolgt über den Einbau von Verbindungen, die mindestens eine, insbesondere zwei, gegenüber Isocyanatgruppen reaktive und mindestens eine zur Kationenbildung befähigte Gruppe im Molekül enthalten; die einzusetzende Menge kann aus der angestrebten Aminzahl berechnet werden.

Geeignete gegenüber Isocyanatgruppen reaktive Gruppen sind die vorstehend beschriebenen, insbesondere Hydroxylgruppen sowie primäre und/oder sekundäre Aminogruppen, von denen die Hydroxylgruppen bevorzugt verwendet werden.

Beispiele geeigneter Verbindungen dieser Art sind 2,2-Dimethylolethyl- oder - propylamin, die mit einem Keton blockiert sind, wobei die resultierende Ketoximgruppe vor der Bildung der kationischen Gruppe (f1) wieder hydrolysiert wird, oder N,N-Dimethyl-, N,N-Diethyl- oder N-Methyl-N-ethyl-2,2-dimethylolethyl oder -propylamin.

Die Einführung von hydrophilen funktionellen (potentiell) anionischen Gruppen (f2) in die Polyurethanpräpolymere erfolgt über den Einbau von Verbindungen, die mindestens eine gegenüber Isocyanatgruppen reaktive und mindestens eine zur Anionenbildung befähigte Gruppe im Molekül enthalten; die einzusetzende Menge kann aus der angestrebten Säurezahl berechnet werden.

Beispiele geeigneter Verbindungen dieser Art sind solche, die zwei gegenüber Isocyanatgruppen reaktive Gruppen im Molekül enthalten. Geeignete gegenüber Isocyanatgruppen reaktive Gruppen sind insbesondere Hydroxylgruppen, sowie primäre und/oder sekundäre Aminogruppen. Demnach können beispielsweise Alkansäuren mit zwei Substituenten am alpha-ständigen Kohlenstoffatom eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben 2 bis etwa 25, vorzugsweise 3 bis 10 Kohlenstoffatome. Beispiele geeigneter Alkansäuren sind Dihydroxypropionsäure, Dihydroxybemsteinsäure und Dihydroxybenzoesäure. Eine besonders bevorzugte Gruppe von Alkansäuren sind die alpha, alpha-Dimethylolalkansäuren der allgemeinen Formel R²⁻C(CH₂OH)₂COOH, wobei R² für ein Wasserstoffatom oder eine Alkylgruppe mit bis zu etwa 20 Kohlenstoffatomen steht. Beispiele besonders gut geeigneter Alkansäuren sind 2,2-Dimethylolessigsäure, 2,2-Dimethylolpropionsäure, 2,2-Dimethylolbuttersäure und 2,2-Dimenthylolpentansäure. Die bevorzugte Dihydroxyalkansäure ist 2,2-Dimethylolpropionsäure. Aminogruppenhaltige Verbindungen sind beispielsweise ###,###-Diaminovaleriansäure, 3,4-Diaminobenzoesäure, 2,4-Diaminotoluolsulfonsäure und 2,4-Diaminodiphenylethersulfonsäure.

Hydrophile funktionelle nichtionische Poly(oxyalkylen)gruppen (f3) können als laterale oder endständige Gruppen in die Polyurethanmoleküle eingeführt werden. Hierfür können neben den vorstehend beschriebenen Polyetherdiolen beispielsweise Alkoxypoly(oxyalkylen)alkohole mit der allgemeinen Formel R³O-(-CH₂-CHR⁴-O-)ᵣ H in der R³ für einen Alkylrest mit 1 bis 6 Kohlenstoffatomen, R⁴ für ein Wasserstoffatom oder einen Alkylrest mit 1 bis 6 Kohlenstoffatomen und der Index r für eine Zahl zwischen 20 und 75 steht, eingesetzt werden. (vgl. die Patentanmeldungen EP 0 354 261 A 1 oder EP 0 424 705 A 2).

Die Auswahl der hydrophilen funktionellen Gruppen (f1) oder (f2) ist so zu treffen, daß keine störenden Reaktionen, wie etwa Salzbildung oder Vernetzung mit den funktionellen Gruppen, die gegebenenfalls in den übrigen Ausgangsverbindungen und/oder Bestandteilen der erfindungsgemäßen Polyurethane oder der erfindungsgemäßen Polymergemische, Dispersionen, Beschichtungsstoffe, Dichtungsmassen oder Klebstoffe vorliegen, möglich sind. Der Fachmann kann daher die Auswahl in einfacher Weise anhand seines Fachwissens treffen.

Von diesen hydrophilen funktionellen (potentiell) ionischen Gruppen (f1) und (f2) und den hydrophilen funktionellen nichtionischen Gruppen (f3) sind die (potentiell) anionischen Gruppen (f2) vorteilhaft und werden deshalb besonders bevorzugt verwendet.

Die Herstellung der isocyanatgruppenhaltigen Polyurethanpräpolymere aus den vorstehend beschriebenen Ausgangsverbindungen weist gleichfalls keine methodischen Besonderheiten auf, sondern erfolgt in Masse oder in einem inerten organischen Medium, vorzugsweise in einem inerten organischen Medium, wobei polare organische Lösemittel, insbesondere wassermischbare Lösemittel wie Ketone, Ester, Ether, cyclische Amide oder Sulfoxide, bevorzugt angewandt werden. Hierbei kann die Umsetzung in mehreren Stufen oder in einer Stufe erfolgen. Wesentlich ist, daß die Umsetzung so lange erfolgt, bis der Gehalt an freien Isocyanatgruppen konstant ist.

Die erfindungsgemäßen Polyurethane können aus den Lösungen oder den Dispersionen, in denen sie anfallen, isoliert und den unterschiedlichsten Verwendungszwecken, insbesondere in lösemittelhaltigen, wasser- und lösemittelfreien pulverförmigen festen oder wasser- und lösemittelfreien flüssigen Beschichtungsstoffen, Klebstoffen und Dichtungsmassen, zugeführt werden. SO eignen sie sich zu Herstellung von pigmentierten oder nicht pigmentierten, konventionellen oder wäßrigen Lacken, Pulverlacken, Pulverslurry-Lacken oder 100%-Systemen. Vor allem aber dienen sie der Herstellung der erfindungsgemäßen Polymergemische.

Zu diesen Zweck wird mindestens ein olefinisch ungesättigtes Monomer (a) in der Gegenwart mindestens eines erfindungsgemäßen Polyurethans in organischer Lösung oder in einer Dispersion polymerisiert.

Wird die Polymerisation in organischer Lösung durchgeführt, hat dies den Vorteil, daß sich dieser Verfahrensschritt unmittelbar nach der Herstellung des erfindungsgemäßen Polyurethans, d.h. ohne einen dazwischengeschalteten Dispergierschritt, durchgeführt werden kann. Dies erleichtert u. U. die Isolierung der erfindungsgemäßen Polymergemische für besondere Verwendungszwecke. Hierbei können die üblichen und bekannten Methoden der Lösungspolymerisation angewandt werden.

Erfindungsgemäß ist es von Vorteil das Monomer (a) oder die Monomeren (a) in der Dispersion mindestens eines erfindungsgemäßen Polyurethans in einem wäßrigen Medium zu polymerisieren, insbesondere dann, wenn die resultierenden erfindungsgemäßen Polymergemische der Herstellung wäßriger Beschichtungsstoffe, Klebstoffe und Dichtungsmassen dienen.

Das wäßrige Medium enthält im wesentlichen Wasser. Hierbei kann das wäßrige Medium in untergeordneten Mengen organische Lösemittel, Neutralisationsmittel, Vernetzungsmittel und/oder lackübliche Additive und/oder sonstige gelöste feste, flüssige oder gasförmige organische und/oder anorganische, nieder- und/oder hochmolekulare Stoffe enthalten. Im Rahmen der vorliegenden Erfindung ist unter dem Begriff "untergeordnete Menge" eine Menge zu verstehen, welche den wäßrigen Charakter des wäßrigen Mediums nicht aufhebt. Bei dem wäßrigen Medium kann es sich aber auch um reines Wasser handeln.

Zum Zweck der Dispergierung werden die hydrophilen erfindungsgemäßen Polyurethane, die die vorstehend beschriebenen (potentiell) ionischen hydrophilen funktionellen Gruppen (f1) oder (f2) enthalten, mit mindestens einem der vorstehend beschriebenen Neutralisationsmittel neutralisiert und hiernach dispergiert. Bei den hydrophilen thio erfindungsgemäßen Polyurethanen, die nur die nichtionischen hydrophilen funktionellen Gruppen (f3) enthalten, erübrigt sich die Anwendung von Neutralisationsmitteln.

Auch die hydrophoben erfindungsgemäßen Polyurethane können in einem wäßrigen Medium dispergiert werden. Vorteilhafterweise wird dies in einem starken Scherfeld durchgeführt. Methodisch gesehen weist dieses Verfahren keine Besonderheiten auf, sondern kann beispielsweise nach den in der europäischen Patentanmeldung EP 0 401 565 A 1 beschriebenen Microfluidizer-Dispergierverfahren erfolgen.

Beispiele für Monomere (a), die für die Herstellung der erfindungsgemäßen Polymergemische geeignet sind, sind:

### Monomere (a1):

Hydroxyalkylester der Acrylsäure, Methacrylsäure oder einer anderen alpha,beta-ethylenisch ungesättigten Carbonsäure, welche sich von einem Alkylenglykol ableiten, der mit der Säure verestert ist, oder durch Umsetzung der Säure mit einem Alkylenoxid erhältlich sind, insbesondere Hydroxyalkylester der Acrylsäure, Methacrylsäure, Crotonsäure oder Ethacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, - methacrylat, -ethacrylat oder -crotonat; 1,4-Bis(hydroxymethyl)cyclohexan-, Octahydro-4,7-medmo-1H-inden-dimethanol- oder Methylpropandiolmonoacrylat, -monomethacrylat, -monoethacrylat oder - monocrotonat; oder Umsetzungsprodukte aus cyclischen Estern, wie z.B. epsilon-Caprolacton und diesen Hydroxyalkylestern; oder olefinisch ungesättigte Alkohole wie Allylalkohol oder Polyole wie Trimethylolpropanmono- oder diallylether oder Pentaerythritmono-, -di- oder -triallylether. Diese höherfunktionellen Monomeren (a1) werden im allgemeinen nur in untergeordneten Mengen verwendet. Im Rahmen der vorliegenden Erfindung sind hierbei unter untergeordneten Mengen an höherfunktionellen Monomeren solche Mengen zu verstehen, welche nicht zur Vernetzung oder Gelierung der Polyacrylatharze führen, es sei denn, die erfindungsgemäßen Polymergemische sollen in der Form von vernetzten Mikrogelteilchen vorliegen.

### Monomere (a2):

(Meth)Acrylsäure-, Crotonsäure- oder Ethacrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat, -methacrylat, -crotonat oder -ethacrylat; cycloaliphatische (Meth)acrylsäure-, Crotonsäure- oder Ethacrylsäureester, insbesondere Cyclohexyl-, Isobomyl-, Dicyclopentadienyl-, Octahydro-4,7-methano-1H-inden-methanol- oder tert.-Butylcyclohexyl(meth)acrylat, -crotonat oder -ethacrylat; (Meth)Acrylsäure-, Crotonsäure- oder Ethacrylsäureoxaalkylester oder - oxacycloalkylester wie Ethyltriglykol(meth)acrylat und Methoxyoligoglykol(meth)acrylat mit einem Molekulargewicht Mn von vorzugsweise 550; oder andere ethoxylierte und/oder propoxylierte hydroxylgruppenfreie (Meth)acrylsäure-, Crotonsäure- oder Ethacrylsäurederivate. Diese können in untergeordneten Mengen höherfunktionelle (Meth)Acrylsäure-, Crotonsäure- oder Ethacrylsäurealkyl- oder -cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder-1,4-diol-di(meth)acrylat; Trimethylolpropan-di- oder -tri(meth)acrylat; oder Pentaerythrit-di-, -tri- oder tetra(meth)acrylat sowie die analogen Ethacrylate oder Crotonate; enthalten. Im Rahmen der vorliegenden Erfindung sind hierbei unter untergeordneten Mengen an höherfunktionellen Monomeren (a2) solche Mengen zu verstehen, welche nicht zur Vernetzung oder Gelierung der Polyacrylatharze führen, es sei denn, die erfindungsgemäßen Polymergemische sollen in der Form von vernetzten Mikrogelteilchen vorliegen.

### Monomere (a3):

Mindestens eine Säuregruppe, vorzugsweise eine Carboxylgruppe, pro Molekül tragende ethylenisch ungesättigte Monomere oder ein Gemisch aus solchen Monomeren. Als Komponente (a3) werden besonders bevorzugt Acrylsäure und/oder Methacrylsäure eingesetzt. Es können aber auch andere ethylenisch ungesättigte Carbonsäuren mit bis zu 6 C-Atomen im Molekül verwendet werden. Beispiele für solche Säuren sind Ethacrylsäure, Crotonsäure, Maleinsäure, Fumarsäure und Itaconsäure. Weiterhin können ethylenisch ungesättigte Sulfon- oder Phosphonsäuren, bzw. deren Teilester, als Komponente (a3) verwendet werden. Als Monomere (a3) kommen desweiteren Maleinsäuremono(meth)acryloyloxyethylester, Bernsteinsäuremono(meth)acryloyloxyethylester und Phthalsäuremono(meth)acryloyloxyethylester sowie Vinylbenzoesäure (alle Isomere), alpha-Methylvinylbenzoesäure (alle Isomere) oder Vinylbenzsolsulfonsäure (alle Isomere). in Betracht.

### Monomere (a4):

Vinylester von in alpha-Stellung verzweigten Monocarbonsäuren mit 5 bis 18 C-Atomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt.

### Monomere (a5):

Umsetzungsprodukt aus Acrylsäure und/oder Methacrylsäure mit dem Glycidylester einer in alpha-Stellung verzweigten Monocarbonsäure mit 5 bis 18 C-Atomen je Molekül. Die Umsetzung der Acryl- oder Methacrylsäure mit dem Glycidylester einer Carbonsäure mit einem tertiären alpha-Kohlenstoffatom kann vorher, während oder nach der Polymerisationsreaktion erfolgen. Bevorzugt wird als Komponente (a5) das Umsetzungsprodukt von Acryl- und/oder Methacrylsäure mit dem Glycidylester der Versatic®-Säure eingesetzt. Dieser Glycidylester ist unter dem Namen Cardura® E10 im Handel erhältlich. Ergänzend wird auf Römpp Lexikon Lacke und Druckfarben, Georg Thieme Verlag, Stuttgart, New York, 1998, Seiten 605 und 606, verwiesen.

### Monomere (a6):

Im wesentlichen säuregruppenfreie ethylenisch ungesättigte Monomere wie
- Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien;
- (Meth)Acrylsäureamide wie (Meth)Acrylsäureamid, N-Methyl -, N,N-Dimethyl-, N-Ethyl-, N,N-Diethyl-, N-Propyl-, N,N-Dipropyl, N-Butyl-, N,N-Dibutyl-, N-Cyclohexyl- und/oder N,N-Cyclohexyl-methyl-(meth)acrylsäureamid und/oder N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid, die insbesondere dann eingesetzt werden, wenn die erfindungsgemäßen Polymergemische selbstvernetzende Eigenschaften haben sollen;
- Epoxidgruppen enthaltende Monomere wie der Glycidylester der Acrylsäure, Methacrylsäure, Ethacrylsäure, Crotonsäure, Maleinsäure, Fumarsäure und/oder Itaconsäure;
- Aminoethylacrylat, Aminoethylmethacrylat, Allylamin oder N-Methyliminoethylacrylat;
- N,N-Di(methoxymethyl)aminoethylacrylat oder -methacrylat oder N,N-Di(butoxymethyl)aminopropylacrylat oder -methacrylat;
- Acryloyloxy- oder Methacryloyloxyethyl-, propyl- oder butylcarbamat oder -allophanat; weitere Beispiele geeigneter Monomere, welche Carbamatgruppen enthalten, werden in den Patentschriften US 3,479,328 A 1, US 3,674,838 A 1, US 4,126,747 A 1, US 4,279,833 A 1 oder US 4,340,497 A 1 beschrieben;
- vinylaromatische Kohlenwasserstoffe, wie Styrol, alpha-Alkylstyrole, insbesondere alpha-Methylstyrol, Arylstyrole, insbesondere Diphenylethylen, und/oder Vinyltoluol;
- Nitrile wie Acrylnitril und/oder Methacrylnitril;
- Vinylverbindungen wie Vinylchlorid, Vinylfluorid, Vinylidendichlorid, Vinylidendifluorid; N-Vinylpyrrolidon; Vinylether wie Ethylvinylether, n-Propylvinylether, Isopropylvinylether, n-Butylvinylether, Isobutylvinylether und/oder Vinylcyclohexylether; Vinylester wie Vinylacetat, Vinylpropionat, Vinylbutyrat, Vinylpivalat, Vinylester der Versatic®-Säuren, die unter dem Markennamen VeoVa® von der Firma Deutsche Shell Chemie vertrieben werden (ergänzend wird auf Römpp Lexikon Lacke und Druckfarben, Georg Thieme Verlag, Stuttgart, New York, 1998, Seite 598 sowie Seiten 605 und 606, verwiesen) und/oder der Vinylester der 2-Methyl-2-ethylheptansäure; und/oder
- Polysiloxanmakromonomere, die ein zahlenmittleres Molekulargewicht Mn von 1.000 bis 40.000, bevorzugt von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE 38 07 571 A 1 auf den Seiten 5 bis 7, der DE 37 06 095 A 1 in den Spalten 3 bis 7, der EP 0 358 153 B 1 auf den Seiten 3 bis 6, in der US 4,754,014 A 1 in den Spalten 5 bis 9, in der DE 44 21 823 A 1 oder in der der internationalen Patentanmeldung WO 92/22615 auf Seite 12, Zeile 18, bis Seite 18, Zeile 10, beschrieben sind, oder Acryloxysilan-enthaltende Vinylmonomere, herstellbar durch Umsetzung hydroxyfunktioneller Silane mit Epichlorhydrin und anschließender Umsetzung des Reaktionsproduktes mit Methacrylsäure und/oder Hydroxyalkylestern der (Meth)acrylsäure.

Aus diesen vorstehend beispielhaft beschriebenen geeigneten Monomeren (a) kann der Fachmann die für den jeweiligen Verwendungszweck besonders gut geeigneten Monomeren (a) anhand ihrer bekannten physikalisch chemischen Eigenschaften und Reaktivitäten leicht auswählen. Beispielweise kann er Monomere (a1), (a3) und/oder (a6) auswählen, durch die reaktive funktionelle Gruppen, die für die thermische Vernetzung notwendig sind, eingeführt werden. Gegebenenfalls kann er zu diesem Zwecke einige wenige orientierende Vorversuche durchführen. Insbesondere wird er hierbei darauf achten, daß die Monomeren (a) keine funktionellen Gruppen, insbesondere (potentiell) ionische funktionelle Gruppen, enthalten, die mit den (potentiell) ionischen funktionellen Gruppen in den hydrophilen erfindungsgemäßen Polyurethanen unerwünschte Wechselwirkungen und/oder chemische Reaktionen eingehen.

Sollen die erfindungsgemäßen Polymergemische in der Form von vernetzten Mikrogelteilchen vorliegen oder diese enthalten, werden höherfunktionelle Monomere (a), insbesondere die vorstehend beschriebenen höherfunktionellen Monomeren (a1) und/oder (a2), in Mengen angewandt, die zu einer gezielten Vernetzung der aufgepfropften und/oder nicht aufgepfropften (Co)Polymerisate führen.

Erfindungsgemäß resultieren besondere Vorteile, wenn die Monomeren (a) so ausgewählt werden, daß das Eigenschaftsprofil der aufgepfropften (Co)Polymerisate im wesentlichen von den vorstehend beschriebenen (Meth)Acrylatmonomeren (a) bestimmt wird, wobei die anderen Monomeren (a) dieses Eigenschaftsprofil in vorteilhafter Weise breit variieren.

Erfindungsgemäß resultieren ganz besondere Vorteile, wenn Gemische der Monomeren (a1), (a2) und (a6) sowie gegebenenfalls (a3) verwendet werden.

Methodisch gesehen weist die Herstellung der erfindungsgemäßen Polymergemische keine Besonderheiten auf, sondern erfolgt nach den üblichen und bekannten Methoden der radikalischen Lösungspolymeriation oder der Emulsionspolymerisation, Miniemulsionspolymerisation oder Mikroelmulsionspolymerisation in Gegenwart mindestens eines Polymerisationsinitiators, so wie sie beispielsweise in den Patentanmeldungen und Patentschriften DE 197 22 862 C 2, DE 196 45 761 A 1, EP 0 401 565 A 1, EP 0 522 420 A 1, FP 0 522 419 A 2, EP 0 755 946 A 1, EP 0 608 021 A 1, EP 0 708 788 A 1 oder EP 0 730 613 A 1 sowie in den nicht vorveröffentlichten deutschen Patentanmeldungen DE 199 53 446.2, DE 199 53 445.2 oder DE 199 53 203.6 beschrieben werden.

Bei der Emulsionspolymerisation können die Monomeren (a) auch mit Hilfe eines Teils einer erfindungsgemäßen Polyurethandispersion und Wasser in eine Präemulsion gebracht werden, die dann langsam einer Vorlage zudosiert wird, worin die eigentliche Emulsionspolymerisation abläuft.

Beispiele geeigneter Polymerisationsinitiatoren sind freie Radikale bildende Initiatoren wie Dialkylperoxide, wie Di-tert.-Butylperoxid oder Dicumyl-peroxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethylhexanoat oder tert.-Butylper-2-ethylhexanoat; Kalium-, Natrium- oder Ammoniumsperoxodisulfat; Azodinitrile wie Azobisisobutyronitril; C-C-spaltende Initiatoren wie Benzpinakolsilylether; oder eine Kombination eines nicht oxidierenden Initiators mit Wasserstoffperoxid. Bevorzugt werden wasserunlösliche Initiatoren verwendet. Die Initiatoren werden bevorzugt in einer Menge von 0,1 bis 25 Gew.-%, besonders bevorzugt von 0,75 bis 10 Gew.-%, bezogen auf das Gesamtgewicht der Monomeren (a), eingesetzt.

In den Lösungen oder den wäßrigen Emulsionen werden dann die Monomeren (a) mit Hilfe der vorstehend genannten radikalbildenden Initiatoren bei Temperaturen von 0 bis 95°C, vorzugsweise 40 bis 95 °C, und bei Verwendung von Redoxsystemen bei Temperaturen von 30 bis 70 °C polymerisiert. Bei Arbeiten unter Überdruck kann die Emulsionspolymerisation auch bei Temperaturen oberhalb 100 °C durchgeführt werden. Gleiches gilt für die Lösungspolymerisation, wenn höhersiedende organische Lösemittel und/oder Überdruck angewandt wird.

Es ist bevorzugt, daß mit dem Initiatorzulauf einige Zeit, im allgemeinen ca. 1 bis 15 Minuten, vor dem Zulauf der Monomeren begonnen wird. Ferner ist ein Verfahren bevorzugt, bei dem die Initiatorzugabe zum gleichen Zeitpunkt wie die Zugabe der Monomeren begonnen und etwa eine halbe Stunde, nachdem die Zugabe der Monomeren beendet worden ist, beendet wird. Der Initiator wird vorzugsweise in konstanter Menge pro Zeiteinheit zugegeben. Nach Beendigung der Initiatorzugabe wird das Reaktionsgemisch noch so lange (in der Regel 1 bis 1,5 Stunden) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung, unumgesetzt zurückbleiben kann.

Als Reaktoren für die Polymerisation kommen die üblichen und bekannten Rührkessel, Rührkesselkaskaden, Rohrreaktoren, Schlaufenreaktoren oder Taylorreaktoren, wie sie beispielsweise in der Patentschrift DE 1 071 241 B 1, den Patentanmeldungen EP 0 498 583 A 1 oder DE 198 28 742 A 1 oder in dem Artikel von K. Kataoka in Chemical Engineering Science, Band 50, Heft 9, 1995, Seiten 1409 bis 1416, beschrieben werden, in Betracht.

Erfindungsgemäß ist es von Vorteil, die erfindungsgemäßen Polyurethane und die Monomeren (a) so auszuwählen, daß das aufgepfropften (Co)Polymerisat und/oder das gepfropfte hydrophile erfindungsgemäße Polyurethan, insbesondere aber das gepfropfte hydrophile erfindungsgemäße Polyurethan, hydrophile funktionelle Gruppen, insbesondere Carbonsäuregruppen und/oder Carboxylatgruppen (f2), enthalten.

Bei den erfindungsgemäßen Pfropfmischpolymerisaten, die in den erfindungsgemäßen Polymergemischen enthalten sind oder enthalten sein können, kann das Mengenverhältnis von Pfropfgrundlage oder Kern (erfindungsgemäßes Polyurethan) zu Pfropfhülle oder Schale außerordentlich breit variieren, was ein besonderer Vorteil der erfindungsgemäßen Polymergemische ist.

Bei der erfindungsgemäß bevorzugten Verwendung (potentiell) anionischer hydrophiler funktioneller Gruppen (f2), insbesondere von Carbonsäuregruppen, resultieren weitere besondere Vorteile, da in den erfindungsgemäßen Pfropfmischpolymerisaten das Verhältnis von Säurezahl der Schale zu Säurezahl des Kerns ebenfalls breit variiert werden kann.

Die erfindungsgemäßen Polymergemische können aus den Lösungen oder den Dispersionen, in denen sie anfallen, isoliert und den unterschiedlichsten Verwendungszwecken, insbesondere in lösemittelhaltigen, wasser- und lösemittelfreien pulverförmigen festen oder wasser- und lösemittelfreien flüssigen Beschichtungsstoffen, Klebstoffen und Dichtungsmassen, zugeführt werden. Insbesondere eignen sie sich zu Herstellung von pigmentierten oder nicht pigmentierten, konventionellen oder wäßrigen Lacken, Pulverlacken, Pulverslurry-Lacken oder 100%-Systemen.

Erfindungsgemäß ist es indes von Vorteil, die erfindungsgemäßen Dispersionen, die in erfindungsgemäßer Verfahrensweise entweder als Primärdispersionen oder als Sekundärdispersionen durch Dispergieren der Lösungen der erfindungsgemäßen Polymergemische in Wasser anfallen, als solche für die Herstellung von erfindungsgemäßen wäßrigen Beschichtungsstoffen, Klebstoffen und Dichtungsmassen oder als wäßrige Beschichtungsstoffe, Klebstoffe und Dichtungsmassen zu verwenden. In der Verwendung als Beschichtungsstoffe zeigen sie hervorragende Filmbildungeigenschaften.

Hierbei können die erfindungsgemäßen wäßrigen Beschichtungsstoffe, Klebstoffe und Dichtungsmassen physikalisch, thermisch oder thermisch und mit aktinischer Strahlung härtbar sein.

Im Rahmen der vorliegenden Erfindung bedeutet der Begriff "physikalische Härtung" die Härtung einer Schicht aus einem Beschichtungsstoff, einem Klebstoff oder einer Dichtungsmasse durch Verfilmung durch Lösemittelabgabe aus dem Beschichtungsstoff, dem Klebstoff oder der Dichtungsmasse, wobei die Verknüpfung innerhalb der Beschichtung über Schlaufenbildung der Polymermoleküle der Bindemittel (zu dem Begriff vgl. Römpp Lexikon Lacke und Druckfarben, Georg Thieme Verlag, Stuttgart, New York, 1998, »Bindemittel«, Seiten 73 und 74) erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, »Härtung«, Seiten 274 und 275). Üblicherweise sind hierfür keine Vernetzungsmittel notwendig. Gegebenenfalls kann die physikalische Härtung durch Luftsauerstoff, Hitze oder durch Bestrahlen mit aktinischer Strahlung unterstützt werden.

Im Rahmen der vorliegenden Erfindung bezeichnet der Begriff "selbstvernetzend" die Eigenschaft eines Bindemittels mit sich selbst Vernetzungsreaktionen einzugehen. Voraussetzung hierfür ist, daß in den Bindemitteln bereits beide Arten von komplementären reaktiven funktionellen Gruppen enthalten sind, die für eine Vernetzung notwendig sind. Als fremdvernetzend werden dagegen solche Beschichtungsstoffe, Klebstoffe und Dichtungsmassen bezeichnet, worin die eine Art der komplementären reaktiven funktionellen Gruppen in dem Bindemittel, und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Im Rahmen der vorliegenden Erfindung ist unter aktinischer Strahlung elektromagnetische Strahlung, wie nahes Infrarot (NIR), sichtbares Licht, UV-Strahlung oder Röntgenstrahlung, insbesondere UV-Strahlung, und Korpuskularstrahlung wie Elektronenstrahlung zu verstehen. Werden die thermische und die Härtung mit aktinischer Strahlung gemeinsam angewandt, spricht man auch von "Dual Cure" und "Dual-Cure-Beschichtungsstoff", "Dual-Cure-Klebstoff " oder "Dual-Cure-Dichtungsmasse".

Die erfindungsgemäßen wäßrigen Klebstoffe können außer den erfindungsgemäßen Polymergemischen weitere geeignete übliche und bekannte Bestandteile in wirksamen Mengen enthalten. Beispiele geeigneter Bestandteile sind die nachstehend beschriebenen Vernetzungsmittel und Additive, soweit sie für die Herstellung von Klebstoffen in Betracht kommen.

Die erfindungsgemäßen wäßrigen Dichtungsmassen können ebenfalls außer den erfindungsgemäßen Polymergemischen weitere geeignete übliche und bekannte Bestandteile in wirksamen Mengen enthalten. Beispiele geeigneter Bestandteile sind ebenfalls die nachstehend beschriebenen Vernetzungsmittel und Additive, soweit sie für die Herstellung von Dichtungsmassen in Betracht kommen.

Die erfindungsgemäßen Primärdispersionen und Sekundärdispersionen der erfindungsgemäßen Polymergemische sind vor allem für die Herstellung wäßriger Beschichtungsstoffe, insbesondere wäßriger Lacke, geeignet. Beispiele für erfindungsgemäße wäßrige Lacke sind Füller, Unidecklacke, Wasserbasislacke und Klarlacke. Ganz besondere Vorteile entfalten die erfindungsgemäßen Primärdispersionen und Sekundärdispersionen, wenn sie zur Herstellung von Wasserbasislacken verwendet werden.

In den Wasserbasislacken sind die erfindungsgemäßen Polymergemische vorteilhafterweise in einer Menge von 1,0 bis 50, bevorzugt 2,0 bis 40, besonders bevorzugt 3,0 bis 35, ganz besonders bevorzugt 4,0 bis 30 und insbesondere 5,0 bis 25 Gew.-%, jeweils bezogen auf das Gesamtgewicht des jeweiligen Wasserbasislacks, enthalten.

Der weitere wesentliche Bestandteil des erfindungsgemäßen Wasserbasislacks ist mindestens ein farb- und/oder effektgebendes Pigment. Die Pigmente können aus anorganischen oder organischen Verbindungen bestehen.

Beispiele geeigneter Effektpigmente sind Metallplättchenpigmente wie handelsübliche Aluminiumbronzen, gemäß DE 36 36 183 A 1 chromatierte Aluminiumbronzen, und handelsübliche Edelstahlbronzen sowie nichtmetallische Effektpigmente, wie zum Beispiel Perlglanz-bzw. Interferenzpigmente, plättchenförmige Effektpigmente auf der Basis von Eisenoxid, das einen Farbton von Rosa bis Braunrot aufweist oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, und die Patentanmeldungen und Patente DE 36 36 156 A 1, DE 37 19 446 A 1, DE 37 19 804 A 1, DE 39 30 601 A 1, EP 0 068 311 A 1, EP 0 264 843 A 1, EP 0 265 820 A 1, EP 0 283 852 A 1, EP 0 293 746 A 1, EP 0 417 567 A 1, US 4,828,826 A oder US 5,244,649 A verwiesen.

Beispiele für geeignete anorganische farbgebende Pigmente sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentvolumenkonzentration«, Seite 563 »Thioindigo-Pigmente«, Seite 567 »Titandioxid-Pigmente«, Seiten 400 und 467, »Natürlich vorkommende Pigmente«, Seite 459 »Polycyclische Pigmente«, Seite 52, »AzomethinPigmente«, »Azopigmente«, und Seite 379, »Metallkomplex-Pigmente«, verwiesen.

Der Wasserbasislack kann mindestens ein Vernetzungsmittel enthalten, das die für die thermische Vernetzung notwendigen komplementären reaktiven funktionellen Gruppen aufweist.

Beispiele geeigneter Vernetzungsmittel sind Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A oder EP 0 245 700 A 1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden, Carboxylgruppen enthaltende Verbindungen oder Harze, wie sie beispielsweise in der Patentschrift DE 196 52 813 A 1 beschrieben werden, Epoxidgruppen enthaltende Verbindungen oder Harze, wie sie beispielsweise in den Patentschriften EP 0 299 420 A 1, DE 22 14 650 B 1, DE 27 49 576 B 1, US 4,091,048 A oder US 3,781,379 A beschrieben werden, blockierte Polyisocyanate, wie sie beispielsweise in den Patentschriften US 4,444,954 A 1, DE 196 17 086 A 1, DE 196 31 269 A 1, EP 0 004 571 A 1 oder EP 0 582 051 A 1 beschrieben werden, und/oder Tris(alkoxycarbonylamino)-triazine, wie sie in den Patentschriften US 4,939,213 A, US 5,084,541 A, US 5,288,865 A oder EP 0 604 922 A beschrieben werden.

Die Anwendung von Vernetzungsmitteln kann entfallen, wenn die in den Wasserbasislacken enthaltenen erfindungsgemäßen Polymergemische selbstvernetzende Eigenschaften haben oder physikalisch vernetzen.

Zusätzlich zu den vorstehend beschriebenen Bestandteilen kann der erfindungsgemäße Wasserbasislack übliche und bekannte Bindemittel und/oder Additive in wirksamen Mengen enthalten.

Beispiele üblicher und bekannter Bindemittel sind oligomere und polymere, thermisch härtbare, lineare und/oder verzweigte und/oder blockartig, kammartig und/oder statistisch aufgebaute Poly(meth)acrylate oder Acrylatcopolymerisate, insbesondere die in der Patentschrift DE 197 36 535 A 1 beschriebenen, Polyester, insbesondere die in den Patentschriften DE 40 09 858 A 1 oder DE 44 37 535 A 1 beschriebenen, Alkyde, acrylierte Polyester, Polylactone, Polycarbonate, Polyether, Epoxidhar2-Amin-Addukte, (Meth)Acrylatdiole, partiell verseifte Polyvinylester, Polyurethane und acrylierte Polyurethane, wie die in den Patentanmledungen EP 0 521 928 A 1, EP 0 522 420 A 1, EP 0 522 419 A 1, EP 0 730 613 A 1 oder DE 44 37 535 A 1 beschriebenen, oder Polyharnstoffe oder mit aktinischer Strahlung härtbare Bindemittel, wie sie beispielsweise in der deutschen Patentanmeldung DE 198 35 206 A 1 beschrieben werden.

Beispiele geeigneter Additive sind organische und anorganische Füllstoffe, thermisch härtbare Reaktiverdünner oder mit aktinischer Strahlung härtbare Reaktivverdünner (vgl. Römpp Lexikon Lacke und Druckfarben, Stuttgart, New York, 1998, Seiten 491), niedrig siedende organische Lösemittel und/oder hochsiedende organische Lösemittel ("lange Lösemittel"), UV-Absorber, Lichtschutzmittel, Radikalfänger, thermolabile radikalische Initiatoren, Photoinitiatoren, Katalysatoren für die Vernetzung, Entlüftungsmittel, Slipadditive, Polymerisationsinhibitoren, Entschäumer, Emulgatoren, Netzmittel, Haftvermittler, Verlaufmittel, filmbildende Hilfsmittel, rheologiesteuemde Additive oder Flammschutzmittel. Weitere Beispiele geeigneter Lackadditive werden in dem Lehrbuch »Lackadditive« von Johan Bieleman, Wiley-VCH, Weinheim, New York, 1998, beschrieben..

Die Herstellung des erfindungsgemäßen Wasserbasislacks weist keine Besonderheiten auf, sondern erfolgt in üblicher und bekannter Weise durch Vermischen der vorstehend beschriebenen Bestandteile in geeigneten Mischaggregaten wie Rührkessel, Dissolver, Rührwerksmühlen, statischen Mischern, Zahnkranz-Dispergatoren oder Extruder nach den für die Herstellung der jeweiligen Wasserbasislacke geeigneten Verfahren.

Selbstverständlich können die vorstehend beschriebenen Pigmente, Vernetzungsmittel und sonstigen Additive sowie die vorstehend beschriebenen Methoden auch für die Herstellung der erfindungsgemäßen Klebstoffe und Dichtungsmassen angewandt werden.

Der Wasserbasislack ist hervorragend für die Herstellung farb- und/oder effektgebender Mehrschichtlackierungen nach dem Naß-in-naß-Verfahren geeignet, bei dem eine Wasserbasislackschicht appliziert, getrocknet und mit einer Klarlackschicht überschichtet wird, wonach Wasserbasislackschicht um Klarlackschicht gemeinsam gehärtet werden. Bekanntermaßen wird dieses Verfahren bei der Kraftfabrzeugerstlackierung und -reparaturlackierung mit Vorteil angewandt.

Darüber hinaus kommen aber die erfindungsgemäßen Beschichtungsstoffe wegen ihrer besonders vorteilhaften Eigenschaften auch für die Beschichtung von Bauwerken im Innen- und Außenbereich, für die Lackierung von Möbeln, Fenstern oder Türen und die industrielle Lackierung, inklusive Coil Coating, Container Coating und die Imprägnierung oder Beschichtung elektrotechnischer Bauteile, in Betracht. Im Rahmen der industriellen Lackierung eignen sie sich für die Lackierung praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transformatorwicklungen.

Die erfindungsgemäßen Klebstoffe und Dichtungsmassen eignen sich hervorragend für die Herstellung von Klebschichten und Dichtungen, die auch unter klimatisch extremen und/oder rasch wechselnden klimatischen Bedingungen auf Dauer von besonders hoher Klebkraft und Dichtungsvermögen sind.

Demzufolge weisen die auf den vorstehend aufgeführten technologischen Gebieten üblicherweise angewandten grundierten oder ungrundierten Substrate, die mit mindestens einer erfindungsgemäßen Beschichtung beschichtet, mit mindestens einer erfindungsgemäßen Klebschicht verklebt und/oder mit mindestens einer erfindungsgemäßen Dichtung abgedichtet sind, bei einem besonders vorteilhaften anwendungstechnischen Eigenschaftsprofil eine besonders lange Gebrauchsdauer auf, was sie wirtschaftlich besonders attraktiv macht.

### Beispiele

### Herstellbeispiel 1

### Die Herstellung eines Polyesterpolyols

In einer für die Polyestersynthese geeigneten Anlage wurden 891,2 Gewichtsteile Pripol® 1013 (handelsübliche Dimerfettsäure), 292,8 Gewichtsteile Hexandiol-1,6, 360,3 Gewichtsteile Isophthalsäure und 250,7 Gewichtsteile Neopentylglykol mit Xylol als Schleppmittel umgesetzt, bis eine Säurezahl <5 mg KOH/g erreicht war. Das Xylol wurde anschließend abdestilliert, und der Polyester wurde weiter reagieren gelassen, bis eine Säurezahl von 3 bis 4 mg KOH/g erreicht war. Der Polyester wurde auf 110°C abgekühlt und mit Methylethylketon auf einen Festkörpergehalt von 73 Gew.-% (theor.) angelöst. Das zahlenmittlere Molekulargewicht lag bei 2.333 Dalton, das massenmittlere bei 4.912 Dalton.

### Herstellbeispiel 2

### Die Herstellung eines isocyanatgruppenhaltigen Polyurethanpräpolymeren

In einer für die Umsetzung von Isocyanaten geeigneten Anlage wurden 1.535,1 Gewichtsteile der Polyesterlösung gemäß Herstellbeispiel 1, 160 Gewichtsteile Dimethylolpropionsäure, 16 Gewichtsteile Neopentylglykol und 636 Gewichtsteile Tetramethylxylylidendiisocyanat (TMXDI) auf 90°C erwärmt. Die resultierende Mischung wurde mit 413,9 Gewichtsteilen Methylethylketon auf einen Festkörpergehalt von 70 Gew.-% (theor.) verdünnt und solange reagieren gelassen bis der Isocyanatgehalt konstant war (2,16 Gew.-%, bezogen auf den Festkörper des Polyurethanpräpolymeren).

### Beispiel 1

### Die Herstellung eines erfindungsgemäßen Polyurethans und einer wäßrigen Dispersion hiervon

1498 Gewichtsteile der Lösung des isocyanatgruppenhaltigen Polyurethanpräpolymeren des Herstellbeispiels 1 wurden bei 90°C in der Anlage vorgelegt. Zur Vorlage wurden unter Rühren 32,3 Gewichtsteile Thiodiethanol zudosiert. Die resultierende Mischung wurde solange bei 90°C gerührt, bis keine Isocyanatgruppen mehr nachweisbar waren.

Die Lösung des erfindungsgemäßen Polyurethans (theoretischer Festkörpergehalt: 73,9 Gew.-%) wurde bei 82°C mit Triethylamin neutralisiert.

Die neutralisierte Lösung wurde in 1686,5 Gewichtsteilen Wasser dispergiert, sodaß eine Dispersion eines Festkörpergehalts von 27,3 Gew.-% resultierte.

### Beispiel 2

### Die Herstellung der Primärdispersion eines erfindungsgemäßen Polymergemischs

In einem üblichen und bekannten Polymerisationsgefäß, ausgestattet mit Rührer, Rüclcflußkühler und zwei Zulaufgefäßen wurden 2.674,5 Gewichtsteile der Dispersion gemäß Beispiel 1 vorgelegt und auf 82°C erhitzt. Zu dieser Vorlage wurden während 4 Stunden über das erste Zulaufgefäß eine Monomermischung aus 243 Gewichtsteilen Hydroxypropylmethacrylat, 70 Gewichtsteilen n-Butylacrylat, 139 Gewichtsteilen Styrol, 139 Gewichtsteilen tert.-Butylcyclohexylacrylat und 104 Gewichtsteilen Methylmethacrylat und während 4,5 Stunden über das zweite Zulaufgefäß 35 Gewichtsteile tert.-Butyl-per-2-ethylhexanoat zudosiert und bei 82°C copolymerisiert. Monomer- und Initiatorzulauf wurden gleichzeitig gestartet. Nach der Beendigung des Initiatorzulaufs wurde während 1 Stunde nachpolymerisiert. Die resultierende Primärdispersion (theoretischer Festkörpergehalt:46,7 Gew.-%) wurde mit 652,5 Gewichtsteilen Wasser verdünnt. Ihr Festkörpergehalt (1 Sunde/130°C) lag bei 34,8 Gew.-%, ihre Säurezahl bei 23,1 mg KOH/g und ihr pH-Wert bei 7,1. Der Koagulatgehalt lag bei 0,06 Gew.-%. Das zahlenmittlere Molekulargewicht des erfindungsgemäßen Pfropfmischpolymerisats betrug 8.569 Dalton, das massenmittlere Molekulargewicht betrug 200.560 Dalton

Die Dispersion wurde auf Glas aufgegossen und lieferte nach der Trocknung und der physikalischen Härtung glasklare Beschichtungen. Außerdem war sie hervorragend für die Herstellung von Wasserbasislacken oder von Klebstoffer und Dichtungsmassen geeignet.

## Patentansprüche

1. Polymergemische auf Polyurethanbasis, herstellbar, indem man in Lösung oder in einer wäßrigen Dispersion mindestens ein olefinisch ungesättigtes Monomer mit mindestens einem Sulfidgruppen enthaltenden Polyurethan polymerisiert, wobei das Sulfidgruppen enthaltende Polyurethan, mindestens eine Gruppe der allgemeinen Formel I in der Polymerhauptkette und/oder mindestens eine Gruppe der allgemeinen Formel II am Kettenende eingebaut enthält:
-X-A-S-B-Y- (I)
-X-A-S-B-YH (II),
worin die Variablen die folgende Bedeutung haben:
S Schwefelatom;
X und Y unabhängig voneinander Sauerstoffatome, Schwefelatome oder Gruppen -NZ mit Z = Wasserstoffatom oder Alkylrest mit 1 bis 10 Kohlenstoffatomen; und
A und B unabhängig voneinander zweiwertige organische Reste.

2. Polymergemische auf Polyurethanbasis nach Anspruch 1, **dadurch gekennzeichnet, daß** als Alkylreste Z Methyl, Ethyl, Propyl, Butyl, Pentyl, Hexyl, Heptyl, Octyl, Nonyl und/oder Decyl verwendet werden.

3. Polymergemische auf Polyurethanbasis nach Anspruch 1 oder 2, **dadurch gekennzeichnet, daß** X oder Y für Sauerstoffatome stehen.

4. Polymergemische auf Polyurethanbasis nach Anspruch 1 oder 2, **dadurch gekennzeichnet, daß** X und Y für Sauerstoffatome stehen.

5. Polymergemische auf Polyurethanbasis nach einem der Ansprüche 1 bis 4, **dadurch gekennzeichnet, daß** es sich bei der zweiwertigen organischen Resten A und B um gleiche oder verschiedene, substituierte oder unsubstituierte aliphatische, cycloaliphatische, aromatische, aliphatisch-cycloaliphatische, aliphatisch-aromatische und/oder cycloaliphatisch-aromatische zweiwertige Reste handelt

6. Polymergemische auf Polyurethanbasis nach einem der Ansprüche 1 bis 5, **dadurch gekennzeichnet, daß** die Polyurethane mindestens eine Gruppe der allgemeinen Formel I in der Polymerhauptkette oder mindestens eine Gruppe der allgemeinen Formel I in der Polymerhauptkette und mindestens eine Gruppe der allgemeinen Formel II am Kettenende eingebaut enthalten.

7. Polymergemische auf Polyurethanbasis nach einem der Ansprüche 1 bis 6, **dadurch gekennzeichnet, daß** die Polyurethane herstellbar sind, indem man mindestens eine Verbindung der allgemeinen Formel III:
HX-A-S-B-YH (III)
worin die Variablen die folgende Bedeutung haben:
S Schwefelatom;
H Wasserstoffatome;
X und Y unabhängig voneinander Sauerstoffatome, Schwefelatome oder Gruppen -NZ mit Z = Wasserstoffatom oder Alkylrest mit 1 bis 10 Kohlenstoffatomen; und
A und B unabhängig voneinander zweiwertige organische Reste;
mit mindestens einem isocymatgruppenhaltigen Polyurethanprä*polymeren umsetzt.

8. Verwendung der Polymergemische auf Polyurethanbasis gemäß einem der Ansprüche 1 bis 7, sowie ihrer Lösungen oder wäßrigen Dispersionen als Beschichtungsstoffe, Klebstoffe oder Dichtungsmassen oder zur Herstellung von Beschichtungastoffen, Klebstoffen oder Dichtungsmassen.

9. Verwendung nach Anspruch 8, **dadurch gekennzeichnet, daß** die Beschichtungsstoffe, Klebstoffe oder Dichtungsmassen physikalisch, thermisch oder thermisch und mit aktinischer Strahlung härtbar sind.

10. Verwendung nach Anspruch 8 oder 9, **dadurch gekennzeichnet, daß** die Beschichtungsstoffe, Klebstoffe oder Dichtungsmassen in der Kraftfahrzeugerstlackierung und reparaturlackierung, der Beschichtung von Bauwerken im Innen- und Außenbereich, für die Lackierung von Möbeln, Fenstern oder Türen und die industrielle Lackierung, inklusive Coil Coating, Container Coating und die Imprägnierung oder Beschichtung elektrotechnischer Bauteile, verwendet werden.

## Claims

1. Polymer mixtures based on polyurethane, preparable by polymerizing at least one olefinically unsaturated monomer with at least one polyurethane containing sulphide groups, in solution or in an aqueous dispersion, the polyurethane containing sulphide groups comprising at least one group of the general formula I in the polymer main chain and/or at least one group of the general formula II incorporated at the chain end:
-X-A-S-B-Y- (I)
-X-A-S-B-YH (II)
in which the variables have the following definitions:
S is the sulphur atom;
X and Y independently of one another are oxygen atoms, sulphur atoms or groups -NZ where Z is the hydrogen atom or an alkyl radical of 1 to 10 carbon atoms; and
A and B independently of one another are divalent organic radicals.

2. Polymer mixtures based on polyurethane according to Claim 1, **characterized in that** said alkyl radicals Z comprise methyl, ethyl, propyl, butyl, pentyl, hexyl, heptyl, octyl, nonyl and/or decyl.

3. Polymer mixtures based on polyurethane according to Claim 1 or 2, **characterized in that** X or Y are oxygen atoms.

4. Polymer mixtures based on polyurethane according to Claim 1 or 2, wherein X and Y are oxygen atoms.

5. Polymer mixtures based on polyurethane according to any of Claims 1 to 4, **characterized in that** said divalent organic radicals A and B comprise identical or different, substituted or unsubstituted aliphatic, cycloaliphatic, aromatic, aliphatic-cycloaliphatic, aliphatic-aromatic and/or cycloaliphatic-aromatic divalent radicals.

6. Polymer mixtures based on polyurethane according to any of Claims 1 to 5, **characterized in that** the polyurethanes comprise at least one group of the general formula I in the polymer main chain or at least one group of the general formula I in the polymer main chain and at least one group of the general formula II incorporated at the chain end.

7. Polymer mixtures based on polyurethane according to any of Claims 1 to 6, **characterized in that** the polyurethanes are preparable by reacting at least one compound of the general formula III:
HX-A-S-B-YH (III)
in which the variables have the following definitions:
S is the sulphur atom;
H is hydrogen atoms;
X and Y independently of one another are oxygen atoms, sulphur atoms or groups -NZ where Z is the hydrogen atom or an alkyl radical of 1 to 10 carbon atoms; and
A and B independently of one another are divalent organic radicals;
with at least one isocyanato-containing polyurethane prepolymer.

8. Use of the polymer mixtures based on polyurethane according to any of Claims 1 to 7, or of their solutions or aqueous dispersions thereof as coating materials, adhesives or sealing compounds or to prepare coating materials, adhesives or sealing compounds.

9. Use according to Claim 8, **characterized in that** said coating material, adhesive or sealing compound is curable physically, thermally, or thermally and with actinic radiation.

10. Use according to Claim 8 or 9, **characterized in that** the coating material, adhesive or sealing compound is used in automotive OEM finishing and refinishing, in the coating of interior and exterior architecture, for the coating of furniture, windows or doors and for industrial coating, including coil coating, container coating, and the impregnation or coating of electrical components.

## Revendications

1. Mélanges polymères à base de polyuréthanne, pouvant être fabriqués en ce que, dans une solution ou une dispersion aqueuse, au moins un monomère oléfinique insaturé est polymérisé avec au moins un polyuréthanne comprenant des groupes sulfure, le polyuréthanne comprenant des groupes sulfure comprenant, sous forme incorporée, au moins un groupe de la formule générale I dans la chaîne principale de polymère et/ou au moins un groupe de la formule générale II en terminaison de chaîne :
-X-A-S-B-Y- (I)
-X-A-S-B-YH (II),
où les variables ont les significations suivantes :
S atome de soufre ;
X et Y indépendamment les uns des autres, des atomes d'oxygène, des atomes de soufre ou des groupes -NZ, avec Z = atome d'hydrogène ou un radicale alkyle avec 1 à 10 atomes de carbone ; et
A et B indépendamment les uns des autres, des radicaux organiques bivalents.

2. Mélanges polymères à base de polyuréthannes selon la revendication 1, **caractérisés en ce que** du méthyle, de l'éthyle, du propyle, du butyle, du pentyle, de l'hexyle, de l'heptyle, de l'octyle, du nonyle et/ou du décyle est utilisé en tant que radicaux alkyles Z.

3. Mélanges polymères à base de polyuréthannes selon la revendication 1 ou 2, **caractérisés en ce que** X ou Y représente des atomes d'oxygène.

4. Mélanges polymères à base de polyuréthannes selon la revendication 1 ou 2, **caractérisés en ce que** X et Y représentent des atomes d'oxygène.

5. Mélanges polymères à base de polyuréthannes selon l'une quelconque des revendications 1 à 4, **caractérisés en ce que** les radicaux organiques bivalents A et B sont des radicaux bivalents identiques ou différents, substitués ou non substitués aliphatiques, cycloaliphatiques, aromatiques, aliphatiques-cycloaliphatiques, aliphatiques-aromatiques et/ou cycloaliphatiques-aromatiques.

6. Mélanges polymères à base de polyuréthannes selon l'une quelconque des revendications 1 à 5, **caractérisés en ce que** les polyuréthannes comprennent, sous forme incorporée, au moins un groupe de la formule générale I dans la chaîne principale de polymère ou au moins un groupe de la formule générale I dans la chaîne principale de polymère et au moins un groupe de la formule générale II en terminaison de chaîne.

7. Mélanges polymères à base de polyuréthannes selon l'une quelconque des revendications 1 à 6, **caractérisés en ce que** les polyuréthannes peuvent être fabriqués en faisant réagir au moins une liaison de formule générale III :
HX-A-S-B-YH (III)
dans laquelle les variables ont les significations suivantes :
S atome de soufre ;
H atome d'hydrogène ;
X et Y indépendamment les uns des autres, des atomes d'oxygène, des atomes de soufre ou des groupes -NZ, avec Z = atome d'hydrogène ou radical alkyle avec 1 à 10 atomes de carbone ; et
A et B indépendamment l'un de l'autre, des radicaux organiques bivalents ;
avec au moins un prépolymère de polyuréthanne comprenant un groupe isocyanate.

8. Utilisation des mélanges polymères à base de polyuréthannes selon l'une quelconque des revendications 1 à 7, ainsi que de leurs solutions ou dispersions aqueuses en tant que revêtements de surface, adhésifs ou matériaux d'étanchéité, ou pour la fabrication de revêtements de surface, d'adhésifs ou de matériaux d'étanchéité.

9. Utilisation selon la revendication 8, **caractérisée en ce que** le revêtement de surface, l'adhésif ou le matériau d'étanchéité sont durcissables physiquement, thermiquement, ou thermiquement et avec un rayonnement actinique.

10. Utilisation selon la revendication 8 ou 9, **caractérisée en ce que** le revêtement de surface, l'adhésif ou le matériau d'étanchéité sont utilisés dans la peinture automobile initiale ou de réparation, dans le revêtement de bâtiments en intérieur et extérieur, pour la peinture de meubles, fenêtres ou portes, et pour le laquage industriel, y compris un couchage sur bande, un couchage sur conteneur et l'imprégnation ou le recouvrement de pièces détachées électrotechniques.
